Europäisches Patentamt

European Patent Office

Office européen des brevets

(11) Veröffentlichungsnummer: **0 414 145 A2**

# (12) EUROPÄISCHE PATENTANMELDUNG

(21) Anmeldenummer: **90115785.9**

(22) Anmeldetag: **17.08.90**

(51) Int. Cl.⁵: **G05D 16/00**

(30) Priorität: **25.08.89 DE 8910198 U**

(43) Veröffentlichungstag der Anmeldung:
**27.02.91 Patentblatt 91/09**

(84) Benannte Vertragsstaaten:
**DE FR GB IT LU SE**

(71) Anmelder: **MESSER GRIESHEIM GMBH**
**Hanauer Landstrasse 330**
**D-6000 Frankfurt/Main 1(DE)**

(72) Erfinder: **Linz, Dieter**
**An der Trinkhalle 11**
**D-6232 Bad Soden(DE)**

(54) **Grundkörper für Reinstgase.**

(57) Die Erfindung betrifft einen Grundkörper für Reinstgase mit einem innerhalb des Grundkörpers angeordneten und mit dem Reinstgas in Verbindung stehenden Druckaufnehmer, welcher über Verbindungsleitungen mit einer Digitalanzeigeeinrichtung verbunden ist.

Um eine Digitalanzeige direkt am Grundkörper unter Beibehaltung eines minimierten Totraumes zu ermöglichen, wird die Digitalanzeigeeinrichtung (12) und der Grundkörper (13) als Baueinheit (10) ausgebildet.

## GRUNDKÖRPER FÜR REINSTGASE

Die Erfindung betrifft einen Grundkörper für Reinstgase, insbesondere für einen Druckregler, mit einem innerhalb des Grundkörpers angeordneten und mit dem Reinstgas in Verbindung stehenden Druckaufnehmer, welcher über Verbindungsleitungen mit einer Digitalanzeigeeinrichtung verbunden ist.

Bei Armaturen, insbesondere bei Druckreglern, für Reinstgase, die beispielsweise zur Prozeßgasversorgung für die Halbleitertechnik, bei der Immissionsschutzmessung oder Eichgasversorgung zur Schadstoffmessung eingesetzt werden, wird ein Höchstanspruch in Bezug auf den Reinheitsgrad von Gasen gestellt. Dabei soll die Qualität des Gases in Bezug auf seine Reinheit möglichst unverändert aus einem Transportbehälter (Druckgasflasche) zu einem Verbraucher geleitet werden. Um Verunreinigungskomponenten wie Partikel und Feuchtigkeit zu verringern, werden Grundkörper mit möglichst wenig vom Reinstgas berührten Toträumen benötigt.

Gattungsgemäße Grundkörper für beispielsweise Druckregler benötigen zur Druckanzeige ein Druckmeßgerät. Zur Druckanzeige in unmittelbarer Nähe des Grundkörpers werden Manometer verwendet, die aus einem Anschlußrohr und der Anzeige bestehen. Das Anschlußrohr wird in einer Bohrung oder auf einem Anschlußstutzen angeordnet. Mit einem als Schraube oder Mutter ausgebildeten Befestigungselement wird das Manometer so befestigt, daß es außerhalb des Gehäusekörpers und abstehend von diesem angeordnet ist.

Hierbei ist von Nachteil, daß das Meßsystem des Manometers, insbesondere das Bourdon-Rohr, Toträume darstellen, in denen sich Verunreinigungskomponenten wie Partikel und Feuchtigkeit ablagern können.

Durch die Verwendung eines Druckaufnehmers und einer Verstärkerschaltung anstatt eines Manometers kann eine Digitalanzeige des ermittelten Druckwertes vorgenommen werden. Es ist hierzu bekannt, den für die digitale Anzeige verwendeten Druckaufnehmer innerhalb eines Gehäusegrundkörpers anzuordnen. Über aus dem Grundkörper herausgeführte Verbindungsleitungen ist der Druckaufnehmer mit entfernt vom Grundkörper angeordneter, separater Digitalfernanzeigeeinrichtung verbunden (DE 37 37 033 A1).

Durch die Anordnung des Druckaufnehmers im Grundkörper ist vorteilhaft der Totraum verringert, während durch die Fernübertragung zu einer Digitalanzeigeeinrichtung die Transportbehälter (Druckgasflaschen) für die Reinstgase außerhalb eines Labors usw. angeordnet werden können.

Es gibt Anwender, die in Ihrem Betrieb in der Regel nur einzelne Druckgasflaschen benötigen, die üblicherweise mit Druckreglern ausgerüstet sind, welche mit Manometern zur Verfügung gestellt werden, weil es sich kostenmäßig und auch steuerungstechnisch nicht rentiert, für diese Fälle eine Fernübertragung auf Schalttafeln mit Digitalanzeigeeinrichtungen vorzunehmen.

Der Erfindung liegt daher die Aufgabe zugrunde, einen Grundkörper für Reinstgase zu schaffen, bei dem eine digitale Anzeige direkt am Grundkörper unter Beibehaltung eines minimierten Totraumes erfolgen kann.

Ausgehend von dem im Oberbegriff des Anspruches 1 berücksichtigten Stand der Technik wird diese Aufgabe erfindungsgemäß dadurch gelöst, daß die Digitalanzeigeeinrichtung und der Grundkörper als Baueinheit ausgebildet sind.

Um bei einer solchen Baueinheit, die jeweils einer Gasversorgung zugeordnet ist, ein einfaches Ablesen der Druckanzeige und eine einfache Befestigung der Digitalanzeigeeinrichtung an dem Grundkörper zu ermöglichen, ist nach einer weiteren Ausbildung der Erfindung der Grundkörper an seiner dem Einstellelement gegenüberliegenden Seite mit einem Gehäuse verbunden, in dem die Digitalanzeigeeinrichtung mit mindestens einer Digitalanzeige angeordnet ist. Vorteilhaft besteht das Gehäuse aus einem Kunststoff, so daß die Digitalanzeigeeinrichtung einerseits staubdicht angeordnet ist und andererseits die mit einer Stromversorgung verbundene Verstärkerschaltung schutzisoliert ist. Vorteilhaft erfolgt die Stromversorgung über eine Batterie.

Durch die Erfindung wird eine kompakte Bauweise eines Grundkörpers mit einer Digitalanzeigeeinrichtung erreicht, weil die Digitalanzeigeeinrichtung direkt an dem Grundkörper eines Druckreglers befestigt ist. Gleichzeitig wird der Nachteil des Manometers, nämlich ein großer Totraum, verringert, weil durch die an sich bekannte Anordnung des Druckaufnehmers im Grundkörper das Bourdon-Rohr und das Gaszuführrohr enffallen. Durch die Baueinheit können separate Schalttafeln sowie deren Befestigungselemente entfallen. Die Befestigung der Digitalanzeigeeinrichtung erfolgt beim Einbau des Grundkörpers.

Für den Anwender ergibt sich der Vorteil, daß beim Erwerb dieser Baueinheit separate Montagen für die Digitalanzeigeeinrichtungen entfallen können.

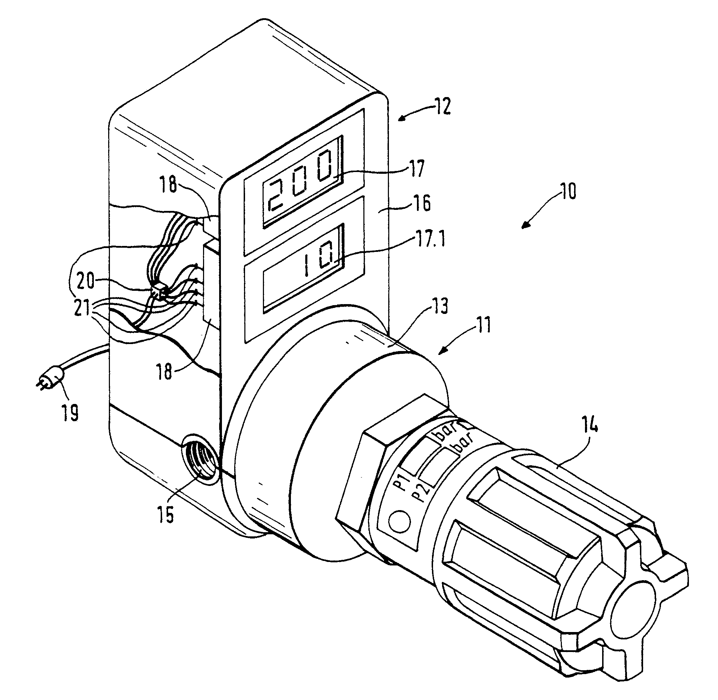

In der Zeichnung ist der Erfindungsgegenstand in einem Ausführungsbeispiel perspektivisch dargestellt.

Die Baueinheit 10 besteht aus einem Druckregler 11 und einer Digitalanzeigeeinrichtung 12.

Druckregler 11 mit in dem Grundkörper 13 angeordneten Druck aufnehmern sind aus der DE 37 37 033 A1 bekannt und müssen daher weder in der Ausbildung noch in der Funktionsweise beschrieben werden. Das an sich bekannte Einstellelement des Druckreglers ist mit 14 bezeichnet. An dem Grundkörper ist ein vorzugsweise die Gaseinströmöffnung 15 und die nicht näher dargestellte Gasausströmöffnung umschließendes Gehäuse 16 aus Kunststoff befestigt, in dem mindestens eine Digitalanzeige 17 angeordnet ist. Bei der in der Zeichnung dargestellten Baueinheit 10 sind in dem Gehäuse 16 zwei Digitalanzeigen 17, 17.1 für die Anzeige des Vor- und Hinterdruckes des Druckreglers 11 vorgesehen. Diese können gleichzeitig oder mittels einer Umschalteinrichtung wechselweise den Vor- oder den Hinterdruck anzeigen. In dem Gehäuse 16 ist eine Verstärkerschaltung 18 angeordnet, die über die aus dem Grundkörper 13 des Druckreglers 11 geführten Verbindungsleitungen 20 mit den Druckaufnehmern verbunden ist. Die lösbare Verbindung erfolgt mittels eines am Ende der Verbindungsleitungen 20 angeordneten Steckverbinders 21. Ausgangsseitig ist die Verstärkerschaltung 18 über einen zweiten Steckverbinder an die Digitalanzeigen 17, 17.1 angeschlossen. Weiterhin ist der Verstärkerschaltung 18 ein Element 19 für die Stromversorgung zugeordnet. Bei dem in der Zeichnung dargestellten Ausführungsbeispiel besteht das Element 19 für die Stromversorgung aus Leitungen und einem an sich bekannten Stecker, mittels dem die Verstärkerschaltung 18 über einen Transformator an ein fest verlegtes Stromnetz anschließbar ist. Vorteilhaft ist jedoch in dem Gehäuse 16 eine Batterie für die Stromversorgung des Verstärkers vorgesehen. Hierdurch wird der mobile Einsatzbereich der Baueinheit 10 wesentlich erhöht.

Das Gehäuse 16 ist vorteilhaft mit dem Grundkörper des Druckreglers 11 so verbunden, daß die Digitalanzeigeeinrichtung mit ihrer Digitalanzeige zu dem Einstellelement 14 gerichtet ist. Durch diese Anordnung des Gehäuses 16 ist bei der Anordnung der Druckgasflasche mit der Baueinheit 10 innerhalb eines Sicherheitsschrankes eine gute Bedienbarkeit des Druckreglers 11 und eine gute Ablesbarkeit der Digitalanzeige 17, 17.1 gewährleistet.

## Ansprüche

1. Grundkörper für Reinstgase, insbesondere für einen Druckregler, mit einem innerhalb des Grundkörpers angeordneten und mit dem Reinstgas in Verbindung stehenden Druckaufnehmer, welcher über Verbindungsleitungen mit einer Digitalanzeigeeinrichtung verbunden ist,
dadurch gekennzeichnet,

daß die Digitalanzeigeeinrichtung (12) und der Grundkörper (13) als Baueinheit (10) ausgebildet sind.

2. Grundkörper nach Anspruch 1,
dadurch gekennzeichnet,
daß er an seiner dem Einstellelement (14) gegenüberliegenden Seite mit einem Gehäuse (16) verbunden ist, in dem die Digitalanzeigeeinrichtung (12) mit mindestens einer Digitalanzeige (17, 17.1) angeordnet ist.

3. Grundkörper nach Anspruch 1 oder 2,
dadurch gekennzeichnet,
daß die Digitalanzeigeeinrichtung (12) eine Verstärkerschaltung (18) aufweist, der ein mobiles Element (19) für die Stromversorgung zugeordnet ist.

4. Grundkörper nach einem der Ansprüche 1 bis 3,
dadurch gekennzeichnet,
daß am Ende der Verbindungsleitungen (20) ein Steckerverbinder (21) vorgesehen ist, mittels der die Verbindungsleitungen (20) an die Verstärkerschaltung (18) anschließbar sind.